Europäisches Patentamt

European Patent Office

Office européen des brevets

(11) Publication number: **0 385 366**
**A2**

## EUROPEAN PATENT APPLICATION

(21) Application number: 90103726.7

(51) Int. Cl.5: **G06F 15/21**

(22) Date of filing: 26.02.90

(30) Priority: 27.02.89 JP 46231/89

(43) Date of publication of application:
05.09.90 Bulletin 90/36

(84) Designated Contracting States:
AT BE CH DE DK ES FR GB GR IT LI NL SE

(71) Applicant: OMRON CORPORATION
10, Tsuchido-cho, Hanazono, Ukyo-ku,
Kyoto-shi, Kyoto-fu(JP)

(72) Inventor: Nakao, Toshiro, c/o Omron
Corporation
Intellectual Property Center, 20 Igadera
Shimokaiinji, Nagaokakyo-shi, Kyoto-fu(JP)
Inventor: Takagi, Yasunari, c/o Omron
Corporation
Intellectual Property Center, 20 Igadera
Shimokaiinji, Nagaokakyo-shi, Kyoto-fu(JP)
Inventor: Utena, Makoto, c/o Omron
Corporation
Intellectual Property Center, 20 Igadera
Shimokaiinji, Nagaokakyo-shi, Kyoto-fu(JP)
Inventor: Endo, Hideo, c/o Omron Corporation
Intellectual Property Center, 20 Igadera
Shimokaiinji, Nagaokakyo-shi, Kyoto-fu(JP)
Inventor: Hayashi, Motoji,c/o Omron
Corporation
Intellectual Property Center, 20 Igadera
Shimokaiinji, Nagaokakyo-shi, Kyoto-fu(JP)
Inventor: Yoshii, Minoru,c/o Omron
Corporation
Intellectual Property Center, 20 Igadera
Shimokaiinji, Nagaokakyo-shi, Kyoto-fu(JP)

(74) Representative: WILHELMS, KILIAN &
PARTNER Patentanwälte
Eduard-Schmid-Strasse 2
D-8000 München 90(DE)

(54) Production management system.

(57) A production management system for optimizing the operation of each station in a production line by the use of an expert system including a knowledge data base for generating an optimum production command for each of the stations. The expert system is equipped with a simulator for simulating and evaluating a future operating condition of the production line for each possible course of action and obtaining optimum production command data under each given circumstance. Thus, it can carry out a highly efficient and adaptive production management under any circumstance because the simulator can offer an optimum production command data even when the knowledge data base is unable to arrive at an optimum solution. Therefore, the knowledge data of the expert system is not required to cover every possible circumstance, and is therefore not required to have a large storage capacity to ensure the adaptability of the system.

FIG 1

## PRODUCTION MANAGEMENT SYSTEM

TECHNICAL FIELD

The present invention relates to a production management system utilizing an expert system which is designed to solve problems according to a knowledge processing process.

BACKGROUND OF THE INVENTION

Expert systems are conventionally utilized in production management systems to create optimum work data by processing data stored in a knowledge data base with its deduction mechanism. According to an expert system, for instance, when a data prediction on future changes in a control object is desired to be obtained based on data on the current condition of the control object, a deduction mechanism carries out a knowledge process by entering data on the control object into the deduction mechanism and storing so-called expert know-hows for predicting the future in its knowledge data base so as to assist a satisfactory operation of the deduction mechanism under any conceivable circumstances. However, the data prediction may not be accurate because it is based on ambiguous human know-hows, and it may lack necessary reliability because it is not possible to cover all the possible circumstances in every detail.

Likewise, when there have been changes in environmental and other conditions, and the past changes in the control object are desired to be reproduced in order to obtain data on the current condition, it is necessary to input data on the control object into the deduction mechanism, and various rules must be taught to the knowledge data base in order to reproduce changes under every conceivable circumstance.

The rules for conventional knowledge data bases for prediction of the future and reproduction of the past included, for instance, the following:

Rule 1: When the state at time $T0$ was $S0$, the state at time $T01'$ will be $S01'$.

Rule 2: When the state at time $T0$ was $S0$, the state at time $T02'$ will be $S02'$.

Rule 3: When the state at time $T0$ was $S0$, the state at time $T03'$ will be $S03'$.

■■■■■■■■

Rule 7: When the state at time $T1$ was $S1$, the state at time $T11'$ will be $S11'$.

Rule 8: When the state at time $T1$ was $S1$, the state at time $T12'$ will be $S12'$.

Rule 9: When the state at time $T1$ was $S1$, the state at time $T13'$ will be $S13'$.

■■■■■■■■

Rule n: When the state at time $Tn$ was $Sn$, the state at time $Tnm'$ will be $Snm'$.

Thus, a large number of rules are required, and, if all the time points and conditions which may be considered necessary for carrying out a prediction are desired to be covered, the number of rules become so numerous that it is impossible to store all these rules in the knowledge data base without making some restrictions. Therefore, when the knowledge data base does not include the rules exactly matching the time points and conditions which the system operation requires, the rules for the nearest time points and conditions must be used as approximations. As a result, the obtained data is discrete, and may not have a sufficient accuracy.

Furthermore, when the reproduction conditions are to be modified, the contents of the existing rules must be changed individually, and this is quite cumbersome.

Thus, the conventional expert system had some insufficiencies in reliability and process efficiency because the knowledge process is strictly based on the application of rules. An example of application of such an expert system to a production management system is disclosed in Japanese patent application No. 63-254388 by the assignee of this application.

According to this production management system, production command data is computed and the future condition of the production line is predicted according to data on the current operating condition of the production line obtained from a data collection system, by utilizing expert know-hows which are stored in the system in advance. However, in this case also, since the prediction of the future condition of the production line is based on human know-hows, optimum production command may not be necessarily obtained. Furthermore, when the inputted know-hows do not cover every possible circumstance, unpredictable incidences may occur, and an appropriate command may not be obtained.

BRIEF SUMMARY OF THE INVENTION

In view of such a recognition by the inventors and the problems of the prior art, a primary object of the present invention is to provide a production management system which can create optimum production command data for controlling each station in a production line under any given circumstance.

A second object of the present invention is to provide a production management system which is provided with a simulator for predicting a future condition through a numerical process in an expert system so that an efficient production management may be possible under any circumstance.

These and other objects of the present invention can be accomplished by providing a production management system, comprising: input means for inputting production plan data specifying a production plan in a production line; data collection means for collecting operation data on an operating condition of each station in the production line; data storage means for storing operation data collected by the data collection means; know-how storage means for storing expert know-how data in a knowledge data base; simulation means for simulating operation of the production line according to the production plan data, and the operation data; control means for producing production command data for controlling the production line according to the production plan data, the operation data, the expert know-how data, and simulation data obtained from the simulation means; and means for transmitting the production command data to each of the production stations.

According to the production management system of the present invention, by the use of a simulator, it is possible to carry out a highly efficient and adaptive production management under any circumstance because the simulator can offer an optimum production command data even when the knowledge data base is unable to arrive at an optimum solution. Therefore, the knowledge data base of the expert system is not required to cover every possible circumstance, and is not required to have a large storage capacity to ensure the adaptability of the system.


BRIEF DESCRIPTION OF THE DRAWINGS

Now the present invention is described in the following in terms of a specific embodiment with reference to the appended drawings, in which:

Figure 1 is block diagram showing the structure of a preferred embodiment of the production management system according to the present invention;

Figure 2 is a layout diagram of the production management system;

Figure 3 is a diagram illustrating the arrangement of the stations along the production line;

Figure 4 is a block diagram showing the functional structure of the system;

Figure 5 is a flow chart showing the operation of the system; and

Figures 6 and 7 are Gant charts showing the progress of the production line.


DETAILED DESCRIPTION OF THE PREFERRED EMBODIMENT

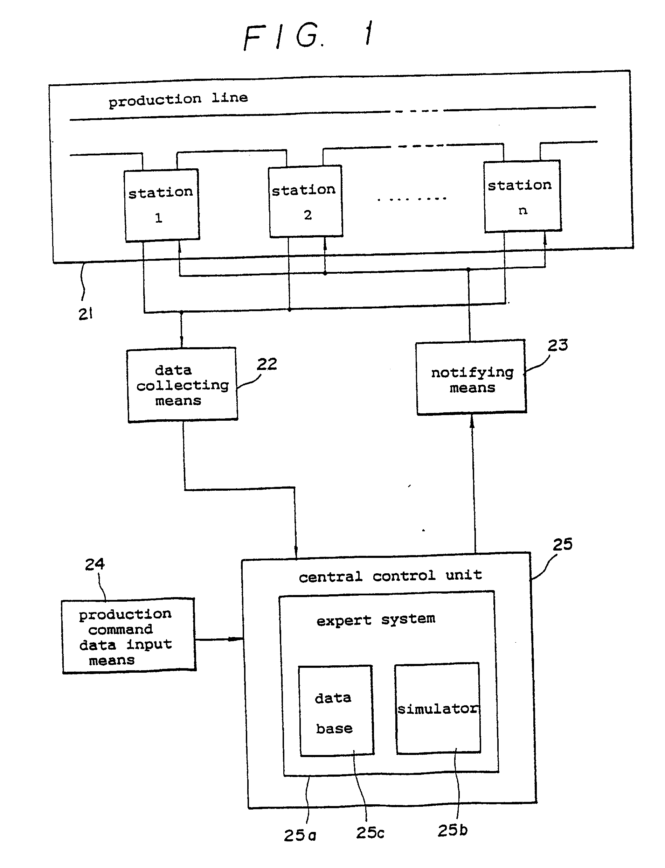

Figure 1 is a diagram describing the production management system of the present invention.

In this drawing, station 1 through station n consisting of various processing machines are arranged in a production line 21 so that various different models of products may be manufactured on the same production line.

Data collecting means 22 collects data on the operating condition, operation history and occurrences of rejects at stations 1 through n of the production line on a real time basis, and transmits it to a central control unit 25.

Meanwhile, production plan data on the models to be produced and their volumes are entered from a production plan data input means 24, and the data is transmitted to the central control unit 25.

The central control unit 25 consists of a data base 25c storing expert know-hows for efficiently operating the production line, an expert system 25a incorporating a simulator 25b for predicting the operating condition of the production line at an arbitrary future time point according to data on the current operating condition, and an external information transmitting means.

The expert system 25a creates appropriate production command data according to the data obtained from the data collecting means 22 and the production plan data input means 24 as well as the predicted data computed by the simulator 25b according to the data obtained from the data collecting means 22, and transmits it to notifying means 23.

The notifying means 23 supplies the production command data from the central control unit 25 to the processing machines of stations 1 through n.

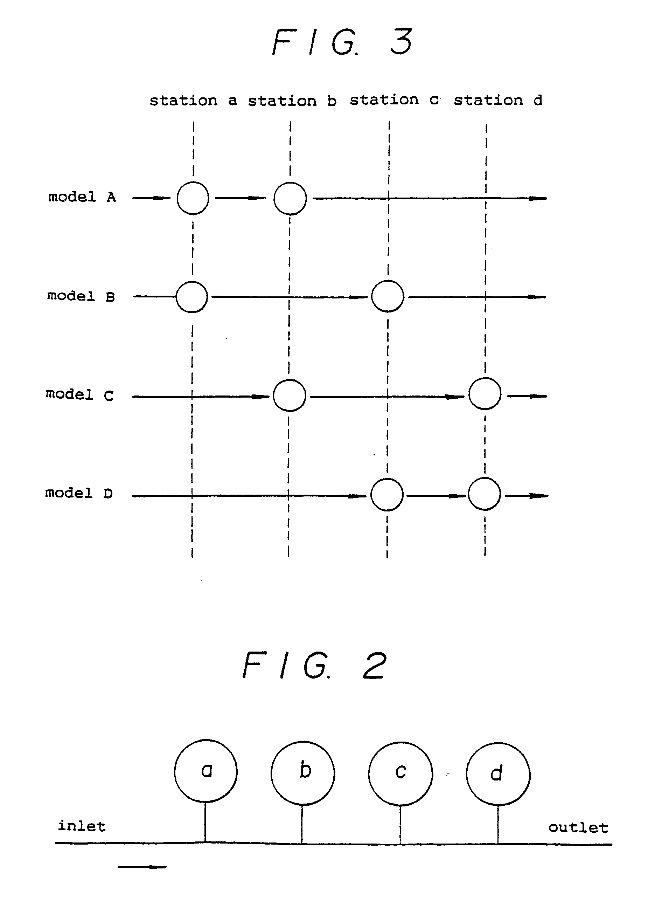

Figure 2 shows the arrangement of the production line.

Figure 3 shows the relationship between the kinds of the products and their process stations.

In Figure 2, the processing machines or stations a, b, c and d are arranged from the beginning of the production line in the order of their associated production stations. In these processing machines or stations a through d, various process steps of assembling, machining, washing, testing and packaging are conducted as shown in Figure 3.

This production line can manufacture four models A, B, C and D of products. When products of the model A are to be manufactured, materials are introduced into the inlet end by an automated carrier, and conveyed in the order of the processing machines a and b for appropriately processing them before the completed products are carried out from the outlet end of the production line. Likewise, in the case of the model B the products are conveyed through a and c. In the case of the model C, the products are conveyed through b and d, and in the case of the model C the products are conveyed through c and d.

In this way, when the production line handles a plurality of models, a command is given from the central control unit 25 in regards to the steps of moving the carriers and operating the processing machines for each different model. The processing details and specifications of each processing machine are also adjusted and modified for each different model.

Further, according to this embodiment, the specifications of the operation of the production line are determined as given in the following:

(1) The processing time is different from one model to another;

(2) The transit time for each product model to be carried by the carrier between different processing stations is fixed;

(3) Each of the stations can handle only a single model at a time; and

(4) The products can move on to the next station only after the products in the next station have moved out, and must therefore stay in the current station as long as the products are still being processed in the next station even when the processing in the current station has been completed.

Materials are supplied to the production line by taking into account such considerations.

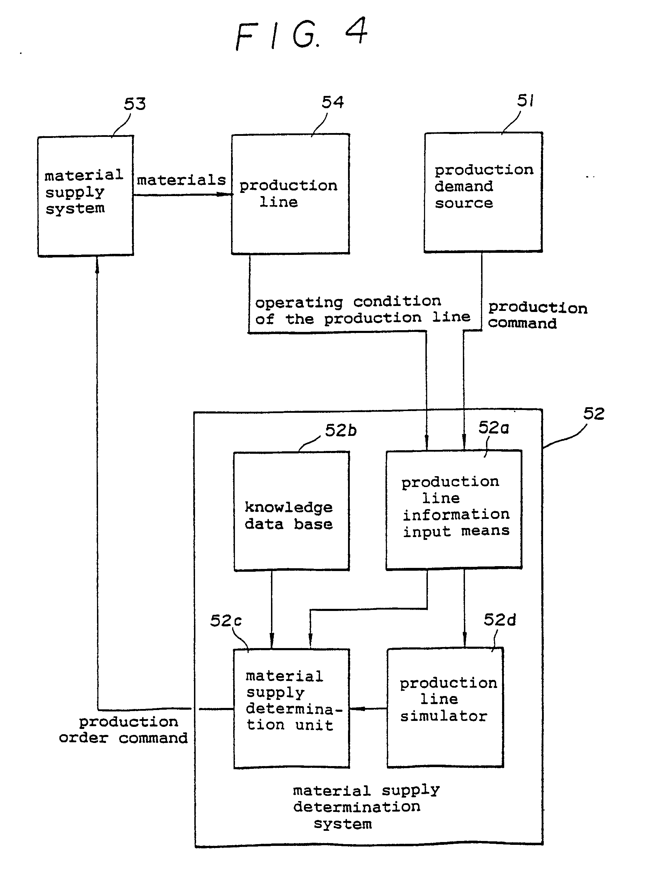

Figure 4 is a functional block diagram showing the internal structure of the production management system.

According to this embodiment, the production management system consists of a production demand source 51, a material supply determination system 52, a material supply system 53, and a production line 54.

The material supply determination system 52 consists of a material supply determination unit 52c constructed from an expert system including a production line information input unit 52a, a knowledge data base 52b, and a production line simulator 52d.

The production demand source 51 sends a production plan command for the production line to the material supply determination system 52.

The production line 54 also supplies data on the condition of the production line to the material supply determination system 52. This data includes the models of the products which are being processed at each station, and the volumes of the products which are yet to be processed at each station.

In the material supply determination system 52, the production plan data and the production line condition data inputted thereto are supplied to the production line information input unit 52a, and then to the material supply determination unit 52c.

The material supply determination unit 52c then finds a most efficient order of production under the given information by utilizing the expert system, and transmits production order command data to the material supply system 53.

Normally, the process in the expert system is based on expert production management know-hows which are stored in the knowledge data base 52b.

The know-hows stored in the knowledge data base 52b include the following rules:

Rule 1: Products of model C are supplied if station b is vacant;

Rule 2: Products of model D are supplied if station c is vacant;

Rule 3: Products of model C or D whichever is more demanded than the other are supplied if stations b and c are both vacant;

Rule 4: Products of model A are supplied if station a is vacant and the number of products yet to be processed by station b is small; and

Rule 5: Products of model B are supplied if station a is vacant and the number of products yet to be processed by station c is small.

The material supply system 53 supplies materials for the products of the commanded models to the production line 54 according to the inputted production order command.

High speed optical LAN or other communication means is used for exchange of data between the material supply determination system 52, the production demand source 51, the material supply system 53 and the production line 54 so that data collection may be carried out on a real time basis.

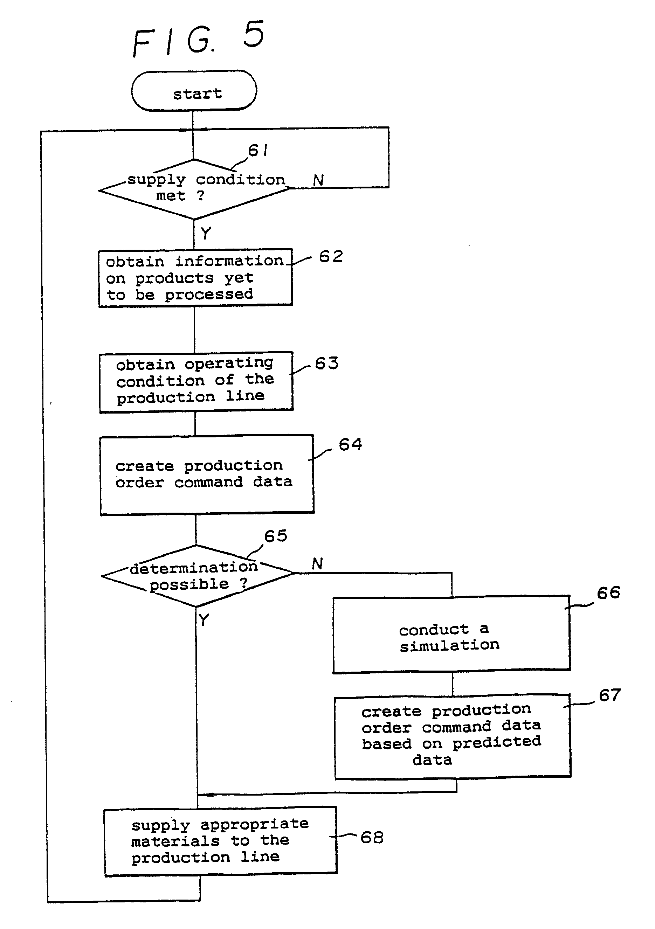

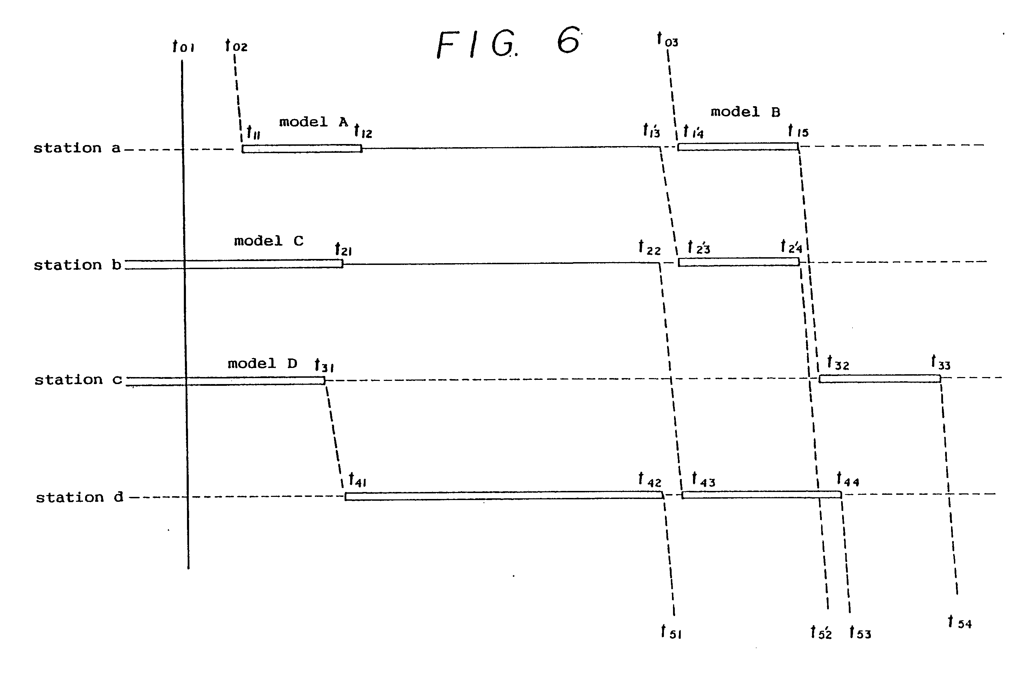

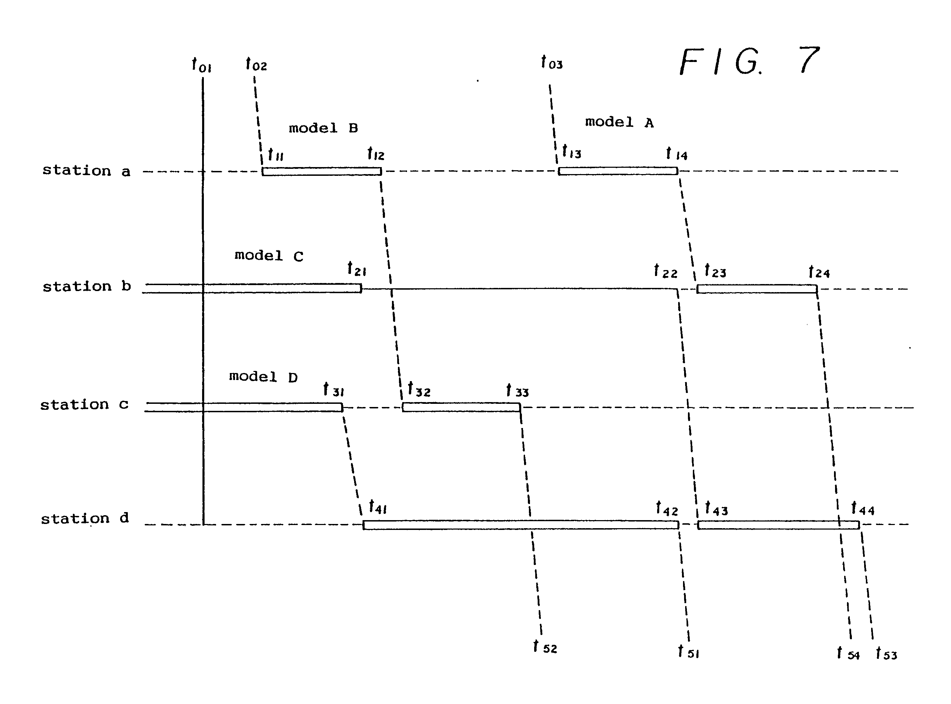

Now the operation of this embodiment is described in the following with reference to the flow chart of Figure 5 and the Gant charts of Figures 6 and 7.

As shown in these drawings, after it has been acknowledged that the materials are ready to be supplied (yes in step 61), the production management system receives information on the supply remainders, or the models and the their numbers of the products that are yet to be processed, and the condition of the production line in such a form as the operating condition of the production line (steps 62 and 63).

Thereafter, the expert system of the material supply determination system 52 starts creating production order command by sequentially checking the internal rules according to such information (step 64).

Here, it is determined if the determination process for creating the production order command is possible or not based upon the given information alone (step 65).

When the determination process is not possible (no in step 65), or when the determination process is not possible according to the presently available information because of a plurality of rules being applicable at the same time, but the determination process may be possible when predicted data on the future is obtained, the production line simulator is activated and a future condition is computed (step 66).

Thereafter, the production order command is created again by taking into account the future data obtained from the production line simulator 52d (step 67).

According to the thus created production order command, the material supply system 53 supplies the materials for the applicable models to the production line (step 68). Thereafter, this action is repeated for each cycle, and the production line operates smoothly and efficiently.

Now the determination process of step 65 is described by taking a concrete example.

Suppose that the current condition in the production line 54 corresponds to the time point $t_{01}$ in Figure 6, and the data on the condition of the production line will then be given as follows:

(1) Station a is vacant;

(2) Station b is occupied by the products of model C;

(3) The products which are yet to be processed in station b are few in number;

(4) Station c is occupied by the products of model D;

(5) The products which are yet to be processed in station c are few in number; and

(6) Station d is vacant.

According to such a condition, the expert system of the material supply determination system 52 derives rule 4 from data (1) and (3), and rule 5 from data (1) and (5). However, even though it can be understood that the products yet to be processed in stations b and c are few in number, it is not known which of the models C and D is going to be finished of processing before the other. Therefore, with the given information, it is not possible to determine which of rule 4 or 5 should have a higher priority than the other. Conventionally, to cope with such circumstances, the rules are initially assigned with different levels of priority, and one of the rules is adopted over the other.

Now the situations are compared depending on which of the rule 4 or 5 is given with a higher priority, and the progress of the operation of the production line is evaluated in the following.

Figure 6 shows the progress of the production line operation when rule 4 has a higher priority, and Figure 7 shows the progress of the production line operation when rule 5 has a higher priority.

In the case of Figure 6, by adopting rule 4, a product of model A is introduced at a time point $t_{02}$. The process on this model A in station b is completed at time $t_{12}$, but since model C is waiting in station b, the model A cannot advance to the next station and moves on to station b only after waiting until time point $t'_{13}$. Thereafter, rule 5 is applied, and model B is introduced, and the time of finishing the processing at all the stations is $t_{54}$.

In the case of Figure 7, by adopting rule 5, model B is introduced at time point $t_{02}$. The processing on the model B in station a is completed at time point $t_{12}$, and advances to the next station c without waiting. At time point $t_{52}$, the processing is completed, the products are carried out of the production line. Thereafter, rule 4 is applied and the processing at all the stations is completed at time point $t_{52}$.

In this way, depending on which of the rule 4 or 5 is applied before the other at the time point $t_{01}$, there is a significant difference in the subsequent production efficiency of the production line.

In this production management system, in order to determine which of the rule 4 or 5 should be applied at time $t_{01}$, a demand is made on the production line simulator 52d to compute the time of completing the model C in the station b and the time of completing the model D in the station c.

The production line simulator 52 receives from the knowledge data base 52b data on the processing capability, the processing speed, and the rejection ratio of the station b, and the processing method for the model C and the volume of the products to be processed, and, at the same time, obtain data on the volume of products that are yet to be processed in the station b from the production line information input unit 52a.

According to such data, the time $t_{21}$ of completion of the process for the model C in the station b is computed as given in the following:

$$t_{21} = t_{01} + v_{bc}/s_b \times r_b \times 1/(1 - b_b)$$

where

$t_{01}$: current time

$v_{bc}$: the volume of the model C to be processed in station b

$s_b$: the processing speed in station b (number/unit time)

$r_b$: the ratio of the products that are yet to be produced in station c

$b_b$: the rejection ratio in station b

In a similar manner, the time $t_{31}$ of completing the processing for the model D in the station c is computed as given in the following:

$$t_{31} = t_{01} + v_{cd}/s_c \times r_c \times 1/(1 - b_c)$$

where

$t_{01}$: current time

$v_{cd}$: the volume of the model D to be processed in station c

$s_c$: the processing speed in station c (number/unit time)

$r_c$: the ratio of the products that are yet to be produced in station c

$b_c$: the rejection ratio in station c

The thus obtained times of completion $t_{21}$ and $t_{31}$ are sent to the material supply determination unit 52c and, at the same time, the following rules are added to the knowledge data base 52 depending on the time sequence of the time points $t_{21}$ and $t_{31}$.

Rule 6: When rules 4 and 5 hold at the same time, a simulation is carried out; Rule 5 is applied if the station b is completed before the other, and the rule 4 is otherwise applied.

As a result, when the material supply determination unit 52c has applied the rule 6 newly added to the knowledge data base 52b according to the data on the times of completion $t_{21}$ and $t_{31}$ obtained from the material supply determination unit 52c, the rule 5 is applied and the model B is introduced into the production line.

The progress of the production line operation after the introduction of the model B is as given in Figure 7, and the processing of a predetermined number of products can be carried out in a short time, and an efficient production line management is made possible.

The above described embodiment of the production management system according to the present inventing was directed to a small and simple production line. However, the production lines to which the present invention may be applied can cover a wide range in terms of not only the number of stations and the contents of processing in each of the stations but also the number of different models. In such complex production systems, it frequently occurs that the completion times of two different stations come very close to each other, and there frequently are cases where a prediction by a production simulator becomes necessary. Conventionally, under such a circumstance, since the priority of production stations were determined arbitrarily without any regards to the future progress of the production line operation, there was a high possibility of creating erroneous commands in terms of the production efficiency.

According to the present invention, such errors are prevented from being committed, and the reliability of the production management system utilizing an expert system can be improved so that the production line may be operated at an optimum efficiency at all time.

## Claims

1. A production management system, comprising:

input means for inputting production plan data specifying a production plan in a production line;

data collection means for collecting operation data on an operating condition of each station said production line;

data storage means for storing operation data collected by said data collection means;

know-how storage means for storing expert know-how data in a knowledge data base;

simulation means for simulating operation of said production line according to said production plan data, and said operation data;

control means for producing production command data for controlling said production line according to said production plan data, said operation data, said expert know-how data, and simulation data obtained from said simulation means; and

means for transmitting said production command data to each of said production stations.

2. A production management system, comprising:

input means for inputting production plan data specifying a production plan in a production line;

data collection means for collecting operation data on an operating condition and an operation history of each station in said production line;

an expert system for storing an expert know-how in a knowledge data base for efficiently operating said production line, and creating production command data based on said data obtained by the said input means and said data collection means; and

means for transmitting said production command data to each of said production stations;

said expert system including a simulator for simulating changes in a condition of said production line by numerically processing said data obtained from said knowledge data base, said input means and said data collection means.

# F I G. 1

production line

| station 1 | station 2 | . . . . . . . . | station n |

21

data collecting means   22

notifying means   23

24

production command data input means

central control unit   25

expert system

data base   |   simulator

25a      25c          25b

# F I G. 3

# F I G. 2

# F I G. 4

```
        53                      54                      51
  ┌──────────┐            ┌──────────┐            ┌──────────┐
  │ material │ materials  │production│            │production│
  │ supply   │──────────→ │ line     │            │ demand   │
  │ system   │            │          │            │ source   │
  └──────────┘            └──────────┘            └──────────┘
```

operating condition
of the production line

production
command

```
┌─────────────────────────────────────────────────────────┐ 52
│              52b                    52a                   │
│       ┌──────────┐            ┌──────────┐                │
│       │knowledge │            │production│                │
│       │data base │            │line      │                │
│       │          │            │information│               │
│       │          │            │input means│               │
│       └──────────┘            └──────────┘                │
│  52c                                        52d           │
│       ┌──────────┐            ┌──────────┐                │
│       │material  │            │production│                │
│       │supply    │ ←────────  │line      │                │
│       │determina-│            │simulator │                │
│       │tion unit │            │          │                │
│       └──────────┘            └──────────┘                │
│              material supply                              │
│              determination                               │
│                  system                                  │
└─────────────────────────────────────────────────────────┘
```

production
order command

# FIG. 5

```
        ( start )
            │
     ┌──────┤
     │      │
     │   ╱─────╲  61
     │  ╱ supply  ╲    N
     │ ╱ condition  ╲──────┐
     │ ╲   met ?   ╱       │
     │  ╲─────────╱        │
     │      │ Y            │
     │  ┌──────────────┐   │
     │  │ obtain       │62 │
     │  │ information  │   │
     │  │ on products  │   │
     │  │ yet to be    │   │
     │  │ processed    │   │
     │  └──────────────┘   │
     │      │              │
     │  ┌──────────────┐   │
     │  │ obtain       │63 │
     │  │ operating    │   │
     │  │ condition of │   │
     │  │ the          │   │
     │  │ production   │   │
     │  │ line         │   │
     │  └──────────────┘   │
     │      │              │
     │  ┌──────────────┐   │
     │  │ create       │64 │
     │  │ production   │   │
     │  │ order        │   │
     │  │ command data │   │
     │  └──────────────┘   │
     │      │              │
     │   ╱─────╲ 65        │
     │  ╱        ╲    N     │
     │ ╱determin- ╲────────┐│
     │ ╲ ation    ╱        ││
     │  ╲possible?╱        ││
     │   ╲─────╱           ││
     │      │ Y      ┌──────────────┐
     │      │        │ conduct a    │66
     │      │        │ simulation   │
     │      │        └──────────────┘
     │      │              │
     │      │        ┌──────────────┐
     │      │        │ create       │67
     │      │        │ production   │
     │      │        │ order        │
     │      │        │ command data │
     │      │        │ based on     │
     │      │        │ predicted    │
     │      │        │ data         │
     │      │        └──────────────┘
     │      │              │
     │  ┌──────────────┐◄──┘
     │  │ supply       │68
     │  │ appropriate  │
     │  │ materials to │
     │  │ the          │
     │  │ production   │
     │  │ line         │
     │  └──────────────┘
     │      │
     └──────┘
```

FIG. 6

EP 0 385 366 A2

FIG. 7